# EUROPEAN PATENT SPECIFICATION

(11) **EP 1 879 251 B1**
(45) Date of publication and mention of the grant of the patent: **06.06.2012**
(21) Application number: 07012658.6
(22) Date of filing: 28.06.2007
(51) Int. Cl.: H01M 8/24

(54) **Compression assembly, solid oxide fuel cell stack, a process for compression of the solid oxide fuel cell stack and its use**
Kompressionsanordnung, Festoxidbrennstoffzellenstapel, Verfahren zur Kompression des Festoxidbrennstoffzellenstapels und Verwendung davon
Ensemble de compression, bloc de pile à combustible d'oxyde solide, procédé pour la compression du bloc de pile à combustible d'oxyde solide et son utilisation

(30) Priority: 14.07.2006 DK 200600978
(43) Date of publication of application: 16.01.2008
(73) Proprietor: Topsoe Fuel Cell A/S, 2800 Kongens Lyngby (DK)
(72) Inventor: Norsk, Jesper, 3050 Humlebaek (DK); Olsen, Christian, 2750 Ballerup (DK); Nielsen, Jens Ulrik, 2860 Søborg (DK); Erikstrup, Niels, 2000 Frederiksberg (DE)

(56) References cited:
- WO-A2-02/27813
- US-A1- 2002 110 722
- US-A1- 2003 113 607
- US-A1- 2005 164 068
- US-A1- 2005 164 077
- US-A1- 2006 003 219

## Description

The invention relates to a process for compression of a fuel cell stack and to a compression system useful particularly in a high temperature fuel cell stack such as a solid oxide fuel cell stack.

### BACKGROUND OF THE INVENTION

A fuel cell is an electrochemical device in which electricity is produced. The fuel, typically hydrogen, is oxidised at a fuel anode and oxygen, typically air, is reduced at a cathode to produce an electric current and form by-product water and heat. The hydrogen can also be derived by internal reforming of a hydrocarbon such as methane in the fuel cell. An electrolyte is required which is in contact with an anode and a cathode and it may be alkaline or acidic, liquid or solid.

In solid oxide fuel cells (SOFC) the electrolyte is a solid, nonporous metal oxide material. SOFC are high temperature fuel cells operating at temperatures of 650-1000°C. They are particularly useful for internal reforming of fuels such as methane.

The use of SOFC in power generation offers potential environmental benefits compared with power generation from sources such as combustion of fossil fuels in internal combustion engines.

A SOFC stack of the planar type is built up of a plurality of flat plate solid oxide fuel cells stacked on top of each other and inserted between two planar end plates consisting of a first end plate adjacent to the first solid oxide fuel cell and a second end plate adjacent to the last solid oxide fuel cell. The solid oxide fuel cells are sealed at their edges by gas seals of typically glass or other brittle materials in order to prevent leakage of gas from the sides of the stack. Situated between each individual solid oxide fuel cell is an interconnect for current collection and gas distribution.

The SOFC stack is mechanically compressed by exerting forces on the two end plates. The end plates can be made of for instance metal. Compression of the end plates is of a sufficient strength to ensure that during operation the gas seals present at the edges of the SOFC cells remain gas tight, electrical contact between the different layers of the SOFC stack is maintained and at the same time of a strength that is low enough to ensure that the electrochemically active components of the SOFC stack are not excessively deformed.

During operation the SOFC stack can be subjected to temperatures of 650°C to 1000°C causing temperature gradients in the SOFC stack and thus thermal expansion of the different components of the SOFC stack. The section of the SOFC stack that experiences the largest expansion depends on the operating conditions and can for instance be located in the centre of the stack or at the border of the stack in for instance a corner. The resulting thermal expansion may lead to a reduction in the electrical contact between the different layers in the SOFC stack. The thermal expansion may also lead to cracks and leakage in the gas seals between the different layers, leading to poorer functioning of the SOFC stack and a reduced power output.

Solving this problem by selecting materials with specific deformation properties has proved to be very difficult since the components of the SOFC stack need to have electrical contact at different temperature profiles and at the same time have a reasonable life-span.

Other ways of solving this problem include different approaches to providing compression of the SOFC stack. The use of mechanical springs is well known, see for instance US patent No. 7001685, in which a spring is used to provide compression on the whole surface of the stack and to absorb the differences in height of two stacks placed in electrical series.

The use of springs for providing compression force on the end plate, however, have the disadvantage of not allowing the different sections of the fuel cell stack to expand as dictated by the operating conditions. This causes loss of electrical contact or leakage of the gas through the gas seals.

It is an objective of the invention to provide a compression assembly for a solid oxide fuel cell stack in which different compression pressures for different parts of the solid oxide fuel cell stack are simultaneously exerted on the stack.

It is yet an objective of the invention to provide a compression assembly in which the compression pressures for the electrochemically active area and the sealing area of the solid oxide fuel cells are not identical.

Yet another objective of the invention is to provide a solid oxide fuel cell stack in which there is established and maintained good electrical contact within the stack during operation.

### BRIEF DESCRIPTION OF THE INVENTION

In the following, a number of technical terms are used. The use of these terms is believed not to be in contradiction with the ordinary use of the terms, but in order to ease the understanding of the invention, a short list of some terms are given below together with an indication of the meaning of these words:
Sealing area: area between the cells in a stack sealing oxidant from fuel.

Electrochemically active area: area covering the surface of the one or more cells in the solid oxide fuel cell stack where the electrochemical reaction takes place.

Compression pressure: positive pressure, i.e. the pressure is greater than the pressure in the environment that surrounds the solid oxide fuel cell stack, and consequently the compression pressure is noted as the difference between the actual loaded pressure and the pressure in the environment surrounding the solid oxide fuel cell stack.

Resilient element: an element that has the capacity of being deformed upon loading and then upon unloading it recovers or almost recovers its original shape. E.g. compressed air may be used as a resilient element, but if there is a leak it will naturally not recover its original shape. Another resilient element could be one that does not instantly react to the compression pressure applied to it, but reacts slowly, or does not return completely to its original state.

According to a first aspect of the invention, some of the above objectives and others are achieved by providing a compression assembly for distributing an external compression force to a solid oxide fuel cell stack, according to claim 1.

The pressure distribution for the compression assembly by said one or more resilient elements may be around 875PA when the solid oxide fuel cell is in use. E.g. may the compression force be between 25 kg and 200 kg over an area between 2800 cm² and 21000 cm².

The compression assembly may be such that said one or more resilient elements allow for a compression between 0.1mm and 0.2 mm, such as 0.1 mm, more in a region in the middle of the force distributing layer than near the sides of the force distributing layer.

The one or more resilient elements in the compression assembly may further be arranged in one or more positioning elements. Furthermore, the one or more resilient elements are selected from the group of compressed air, a fibrous ceramic material and a fibrous metallic material. Alternatively, the one or more resilient elements may comprise a material based on mica, e.g. such that at least one of said one or more resilient elements is a sheet made of mica, which may have a thickness between 0.8-1.2 mm.

Another alternative may be that the one or more resilient elements comprises at least one metal spring. The metal spring must be heat resistant so that it will keep its resiliency even after use in more than 20000 hours at 850°C. The at least one metal spring may be arranged in one or more positioning elements. The positioning elements may e.g. be provided with one or more holes such that said at least one metal spring is arranged in said one or more holes. The one or more positioning elements may e.g. be a positioning plate.

In a second aspect of the invention a solid oxide fuel cell stack comprises an end plate, one or more solid oxide fuel cells, a compression assembly according to claim 10.

In an embodiment of the invention the one or more resilient elements of the solid oxide fuel cell stack may comprise compressed air. The compressed air may e.g. be a positive pressure between 100 and 1000 mbar, preferably 100 mbar. Alternatively, it may be between 250 and 1000 mbar such as 250 mbar, 500 mbar or 1000 mbar independent of the stack height. It is an advantage to use compressed air since it response immediately to changes in the electrochemically area. The same ranges of compression pressure may be used independent on the electrochemically area.

In another embodiment of the invention a solid oxide fuel cell stack is presented, wherein said one or more resilient elements allow for a compression between 0.1 mm and 0.2 mm more in a region in the middle of the force distributing layer than near the sides of the force distributing layer. E.g. the compression in the middle of the force distributing layer may vary linearly with the height of the solid oxide fuel cell stack. The compression in the middle of the force distributing layer may also vary depending on the temperature distribution over the sealing area and the electrochemically area of the solid oxide fuel cell stack. E.g. the temperature in the middle of the force distributing layer may vary such that it is about 100°C higher than the temperature on in the sealing area. For a solid oxide fuel cell stack that is 100 mm high this will cause a difference of 0.12 mm between the height in the electrochemically area and the sealing area.

For example may said one or more resilient elements allow for a compression of 0.1 mm more on the middle than near the sides of said force distributing layer. For a solid oxide fuel cell stack comprising about 75 fuel cells the difference may e.g. at least be 0.2 mm.

In yet another embodiment of the solid oxide fuel cell stack said one or more resilient elements are arranged in one or more positioning elements. Said one or more resilient elements may be selected from the group of a fibrous ceramic material and a fibrous metallic material. Alternatively said one or more resilient elements comprises a material based on mica, which e.g. may fill up the space in the frame. The at least one of said one or more resilient elements is a sheet made of mica. E.g. the number of sheets may be chosen so that they fill out the space in the frame, or the mica sheets may be combined with one or more sheets of another material e.g. one that not necessarily is resilient but may be flexible such that it may bend according to the differences in the height in the middle region of the electrochemically area and the sealing area. The number of mica sheets may e.g. be between 1-7, and their thickness may be between 0.8-1.2 mm.

In another embodiment of the solid oxide fuel cell stack said one or more resilient elements, when the solid oxide fuel cell is in use, provides a pressure distribution such that the compression pressure in the electrochemically active area is between 0.25 bar and 2 bar, e.g. between 0.5 bar and 1 bar.

In yet another embodiment of the solid oxide fuel cell said force transmitting plate is provided with a clamp pressure, such that said rigid frame via said force transmitting plate is provided with a clamp pressure between 70%-90%, such as 85%, of said clamp pressure of said clamp pressure of said force transmitting plate. E.g. may the force transmitting plate have a clamp pressure between 205000 Pa to 818000 Pa such as about 409000 Pa. E.g. may the clamp force on a solid oxide fuel cell stack with an area of the electrochemically area and the sealing area of 12x12 cm² be between 300 kg and 1200 kg such as 600 kg.

In a third aspect of the invention a method for compressing a solid oxide fuel cell stack at both ends of the stack is provided.

In a fourth aspect of the invention the use of the solid oxide fuel cell stack is for the generation of power. E.g. the solid oxide fuel cell stack may be operated at temperatures below 850°C. The solid oxide fuel cell stack may further be used such that a change in the cell current density is between 0.25 to 0.5 A/cm² over a period of time between 1 to 4 minutes. This is especially the case when e.g. one or more resilient elements comprise mica.

Some of the above objectives are achieved by providing a compression assembly for distributing an external compression force to a solid oxide fuel cell stack, according to claim 1.

The objectives are further achieved by providing a process for compressing a solid oxide fuel cell stack at both ends of the stack according to claim 13.

According to another aspect of the invention there is provided a solid oxide fuel cell stack comprising the compression assembly of claim 1 and use of the solid oxide fuel cell stack for the generation of power.

A further embodiment of the invention is compression assembly for distributing an external compression force to a solid oxide fuel cell stack, the external compression force being exerted on both ends of the solid oxide fuel cell stack, the solid oxide fuel cell stack comprising a plurality of solid oxide fuel cells in electrical series, each end of the solid oxide fuel cell stack being placed adjacent to an end plate surface, wherein the surface of at least one of the end plates opposite to the surface facing the solid oxide fuel cells is provided with a force distributing layer comprising a rigid frame extending above the region of the sealing area of the solid oxide fuel cell stack and one or more resilient elements placed inside the space enclosed by the frame and positioned above the electrochemically active area of the solid oxide fuel cell stack, and placed on the force distributing layer a force transmitting plate on which the external compression force is exerted.

Preferred embodiment are a compression assembly, wherein the one or more resilient elements are flexible in nature, or wherein the one or more resilient elements are selected from the group of compressed air, a material based on mica, a fibrous ceramic material, a fibrous metallic material and metal springs.

Another preferred embodiment is a compression assembly, wherein the frame is made of metal, or wherein the frame is integrated with the force transmitting plate.

Still another preferred embodiment is a compression assembly, wherein the one or more resilient elements are arranged in one or more positioning elements provided with holes above the region of the electrochemically active area.

Preferably, the resilient elements are springs and the positioning element is a spring positioning plate.

The invention furthermore provides a process for compressing a solid oxide fuel cell stack at both ends of the stack comprising stacking a plurality of solid oxide fuel cells in electrical series, placing each end of the solid oxide fuel cell stack adjacent to an end plate surface, providing the surface of at least one of the end plates opposite to the surface facing the solid oxide fuel cells with a force distributing layer of flexible elements and a rigid frame above the region of the electrochemically active area and the sealing area of the solid oxide fuel cell stack applying an external force to the force distributing layer, whereby the resulting compression pressure is distributed unequally across the region of the sealing area and the electrochemically active area, and the compression pressure exerted in the region of the sealing area is greater than the compression pressure exerted on the electrochemically active area of the solid oxide fuel cell stack.

### BRIEF DESCRIPTION OF THE DRAWINGS

Fig. 1 shows the different components of a SOFC stack of the invention.
Fig. 2 shows a vertical section of a SOFC stack in another embodiment of the invention.
Fig. 3 shows a vertical section through a SOFC stack in an embodiment of the invention, where the resilient element is air.
Fig. 4 shows an embodiment of the invention, where the resilient elements are springs.
Fig. 5 shows another embodiment of the invention, where the resilient elements are springs.
Fig. 6 shows the distribution of forces in the SOFC stack.

### DETAILED DESCRIPTION OF THE INVENTION

In SOFC many sealing materials require a higher compression pressure to create a gas tight seal than the required compression pressure to create electrical contact on the electrochemically active area. Subjecting the electrochemically active area to compression forces that are too high lead to its deformation. When utilising the compression assembly of the invention the compression forces are separated into several regions so that the electrochemically active area can be compressed with a pressure that is, for instance, smaller than the pressure present in the sealing regions.

This is an advantage because separation of the compression forces makes it possible to choose a suitable compression pressure for the electrochemically active area independent of the compression pressure required in the region of the sealing material.

According to the inventive process, the overall compression force on the fuel cell stack is provide by exerting an external force on force transmitting plates situated at each end of the fuel cell stack. The external force is transmitted through the force transmitting plate and at one or both ends of the fuel cell stack distributed to a force distributing layer comprising a frame extending in the region of the sealing area of the SOFC and one or more resilient elements placed inside the space enclosed by the frame and positioned above the electrochemically active area of the SOFC. Between the force distributing layer and the first solid oxide fuel cell an end plate is placed.

The outer dimensions of the frame, i.e. length and width, are of the same magnitude as those of a single solid oxide fuel cell. In one embodiment the inner dimensions, i.e. inner length and width of the frame, are chosen to provide a surface area covered by the frame corresponding to the sealing area of the solid oxide fuel cell.

The frame is made from a material of greater rigidity than the one or more resilient elements. This is an advantage since it allows the exertion of a greater compression pressure via the frame in the sealing area region compared to the pressure exerted on the electrochemically active area via the one or more resilient elements.

The one or more resilient elements are more flexible than the frame. The force exerted on the force transmitting plate is thereby divided into separate areas with different pressures on the frame and the resilient elements. The flexible material for the one or more resilient elements can be any element that is more flexible than the frame. Examples are materials based on mica or ceramic fibres. Fibrous metallic materials are also suitable. Compressed air or springs of, for instance, metal can also be used.

The one or more resilient elements must cover a surface approximately corresponding to the inner dimensions of the frame. An arbitrary thickness can be chosen since the resilient elements are flexible in nature.

Separating the compression forces in this manner is an advantage as it allows the maintenance of the compression force in situations when temperature gradients cause thermal expansion of the SOFC stack. This allows the SOFC stack to be operated with larger temperature gradients, for instance higher current density, and the stack can be made with a larger number of cells. Higher current density and increased number of cells reduces the overall cost of the SOFC system and increases the power output per stack. SOFC stacks comprising the compression assembly of the invention are therefore particularly suitable for the generation of power.

In an embodiment of the invention the force distributing layer is only situated on the first end plate adjacent to the first solid oxide fuel cell in the stack.

In another embodiment of the invention the force distributing layer is situated on both end plates of the SOFC stack. In an embodiment of the invention the force distributing layer comprises a frame and one or more resilient elements in the form of metal springs. The metal springs are supported by one or more positioning elements provided with apertures or holes in the region of the electrochemically active area in which the metal springs can be introduced. The metal springs provide compression force separated from both the force transmitted through the one or more spring positioning elements and from the force transmitted through the frame. The spring positioning elements can for instance be one or more plates provided with apertures or holes in the region of the electrochemically active area for positioning the metal springs.

Suitable compression pressures that can be exerted in the region of the electrochemically active area are in the range of 0.05 to 3 bars.

Suitable compression pressures that can be exerted in the region of the cell sealing area are in the range of 0.05 to 40 bars.

These pressures depend on interconnect geometries, sealing materials and fuel cell operating gas pressures.

In a further embodiment of the invention the force distributing layer comprises a frame and a plurality of resilient elements of flexible material.

In another embodiment of the invention the force distributing layer comprises a frame and a plurality of springs. The spring positioning element is in this embodiment not required, when a sufficient number of springs are present. A suitable number of springs are 4 to 100.

In a further embodiment of the invention the force distributing layer comprises a frame and a resilient element of compressed air or a flexible material.

In the following figures different embodiments illustrating the invention are described.

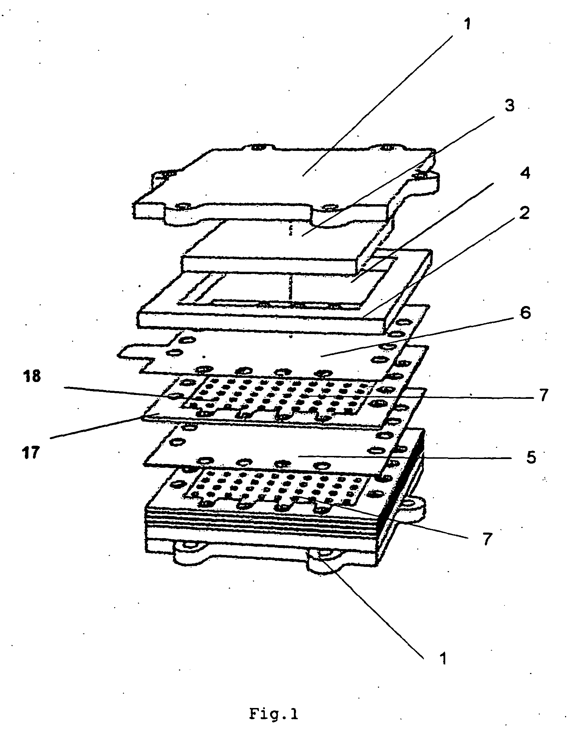

Fig. 1 shows the different components of a SOFC stack according to an embodiment of the invention. External compression force is exerted on force transmitting plate 1. The force is thus transmitted to the force distributing layer comprising frame 2 and one or more resilient elements 3 placed inside the space 4 enclosed by frame 2 and positioned above the electrochemically active area 18 of the solid oxide fuel cell 5. The force distributing layer is followed by planar end plate 6, which in turn is followed by spacer-interconnect assembly 7 and finally by solid oxide fuel cell 5. The frame 2 is positioned adjacent to the sealing area 17 such that when the external force is exerted on the frame 2 part of it is transferred to the sealing area and another part to the electrochemically active area. The number of solid oxide fuel cells depends on the power to be produced by the solid oxide fuel cell stack. The number of solid oxide fuel cells may e.g. be between one and 75 such as between 5 and 75. Consequently, the height of the solid oxide fuel stack depends on the number of solid oxide fuel cells. For example may the height of a solid fuel cell stack comprising 75 fuel cells be about 9cm excluding each of the rigid frames 2 each having a height about 1 cm. The electrochemically area may e.g. be between 2000 cm² and 15000 cm² e.g.9000 cm² and the sealing area between 800 cm² to 6000 cm².

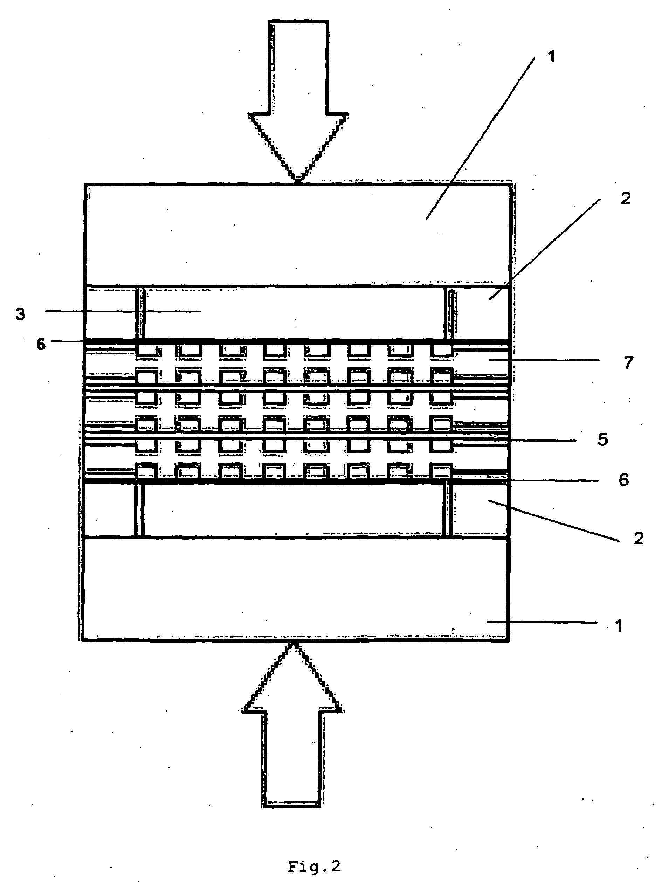

Fig. 2 shows a vertical section through of a SOFC stack according to another embodiment of the invention. The force transmitting plate 1 is subjected to an external compression force which is transmitted to the force distributing layer comprising frame 2 and resilient element 3 and thereby to spacer-interconnect assembly 7 and solid oxide fuel cells 5 placed in electrical series. Each spacer-interconnect assembly 7 has gas channels for transfer of either hydrogen (or another fuel such as methane), oxygen or air to the anode or cathode, respectively.

In this embodiment of the invention two force distributing layers are present. A force distributing layer is placed adjacent to each of the two planar end plates 6. The resilient element 3 can consist of a plurality of elements of flexible material.

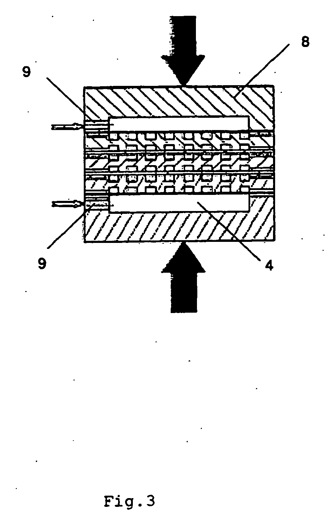

Fig. 3 is a vertical section through a SOFC stack showing a force distributing layer comprising a frame and a resilient element of compressed air. In this embodiment the force transmitting plate and the frame have been integrated to form an integrated frame 8. Inlets 9 for compressed air to the space 4 enclosed by integrated frame 8 are shown. Air pressures of for example 100-1000 mbar gauge can be used.

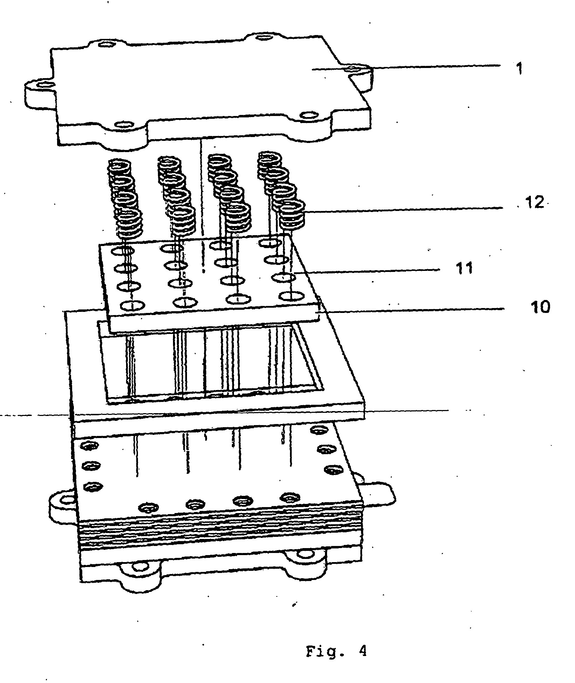

Fig. 4 shows another embodiment of the invention, where the force distributing layer comprises a frame and one or more resilient elements in the form of metal springs 12. A spring positioning plate 10 provided with apertures or holes 11 in the region of the electrochemically active area in which the metal springs 12 can be placed. The metal springs 12 provide compression force separated from both the force transmitted through spring positioning plate 10 and from the force transmitted through frame 2.

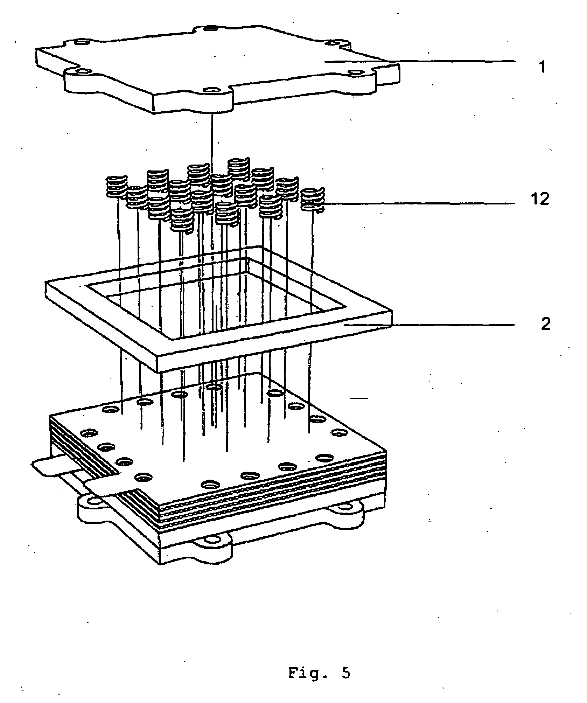

Fig. 5 shows another embodiment of the invention, where the force distributing layer comprises a frame 2 and the resilient elements are a plurality of metal springs 12. In this embodiment a spring positioning plate is not required due to the presence of many metal springs supporting each other, for instance in a number between 4 and 100.

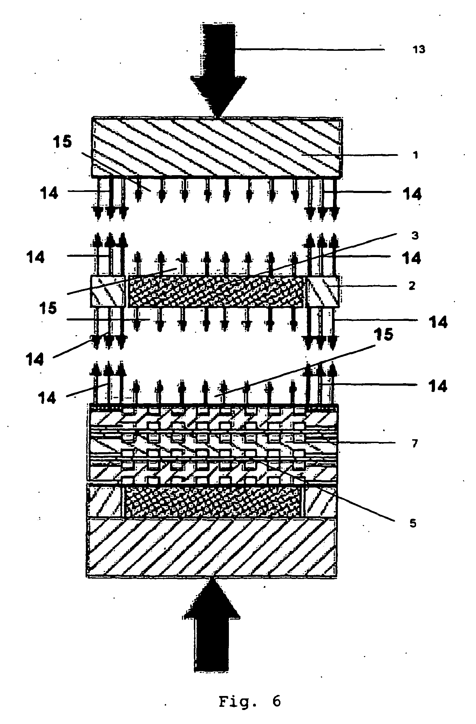

Fig. 6 shows the distribution of forces within the SOFC stack when an external force 13 is exerted on the force transmitting plate 1 thereby providing a compression load to a fuel cell stack. Different compression pressures for different parts of a solid oxide fuel cell stack are simultaneously exerted on the stack. The compression pressures, indicated by arrows, for the electrochemically active area 15 and the sealing area 14 of the solid oxide fuel cell are not equal. The pressure exerted on the resilient element 3 is of a lower magnitude than the pressure exerted on the frame 2, while maintaining good electrical contact within the solid oxide fuel cell stack during operation and at the same time ensuring a gas tight stack.

## Claims

1. Compression assembly for distributing an external compression force to a solid oxide fuel cell stack with a plurality of solid oxide fuel cells(5) and at least one end plate (6), said compression assembly comprises a force transmitting plate(1) and a force distributing layer, said compression assembly is mounted together with the solid oxide fuel cell stack and the external compression force is exerted on said force transmitting plate(1) and said force distributing layer, said force distributing layer is arranged on a surface of at least one end plate (6) opposite to the end plate surface facing the solid oxide fuel cells, said force distributing layer has a rigid frame (2) extending next to a region of a sealing area (17) of the solid oxide fuel cell stack, and one or more resilient elements (3) being placed inside the space enclosed by said rigid frame (2) and being positioned on surface of the end plate (6) opposite to the end plate surface facing the solid oxide fuel cells, so that the electrochemically active area(18) is compressed with a pressure that is smaller than the pressure present in the region of the sealing area (17), when said compression assembly is mounted with the solid oxide fuel cell in use.

2. compression assembly according to claim 1, wherein said one or more resilient elements (3) are arranged in one or more positioning elements.

3. Compression assembly according to claim 1, wherein said one or more resilient elements (3) are selected from the group of compressed air, a fibrous ceramic material and a fibrous metallic material.

4. Compression assembly according to claim 1, wherein said one or more resilient elements comprises a material based on mica.

5. Compression assembly according to claim 4, wherein at least one of said one or more resilient elements (3) is a sheet made of mica.

6. Compression assembly according to claim 5, wherein the thickness of the mica sheet has a thickness between 0.8-1.2 mm.

7. Compression assembly according to claim 1, wherein said one or more resilient elements (3) comprises at least one metal spring (12).

8. Compression assembly according to claim 1, wherein said one or more resilient elements (3) is at least one metal spring (12) and wherein said at least one metal spring (12) is arranged in one or more positioning elements.

9. A solid oxide fuel cell stack comprising a compression assembly according to any one of the preceding claims.

10. A solid oxide fuel cell stack comprising an end plate (6), one or more solid oxide fuel cells and a compression assembly having a force transmitting plate (1) and a force distributing layer, so that an external compression force is exerted on said force transmitting plate(1) and said force distributing layer when said compression assembly is mounted together with the solid oxide fuel cell stack, said force distributing layer is arranged on a surface of said end plate(6) opposite to the end plate surface facing the solid oxide fuel cells, said force distributing layer has a rigid frame (2) extending next to a region of a sealing area (17) of the solid oxide fuel cell stack, and one or more resilient elements (3) being placed inside the space enclosed by said rigid frame (2) and being positioned on surface of the end plate (6) opposite to the end plate surface facing the solid oxide fuel cells, so that the electrochemically active area(18) is compressed with a pressure that is smaller than the pressure present in the region of the sealing area (17), when said compression assembly is mounted with the solid oxide fuel cell in use.

11. Solid oxide fuel cell according to claim 10, wherein said force transmitting plate is provided with a clamp pressure, such that said rigid frame via said force transmitting plate is provided with a clamp pressure between 70%-90% of said clamp pressure of said force transmitting plate.

12. Method for compressing a solid oxide fuel cell stack at both ends of the stack, the method comprising the steps of
stacking a plurality of solid oxide fuel cells(5) in electrical series thereby providing a region of a electrochemically active area (18) and a sealing area (13), providing on each end of the solid oxide fuel cell stack an end plate(6),
providing a force distributing layer of one or more resilient elements (3) and a rigid frame (2) on surface of each end plate being opposite to the region of the electrochemically active area (18) and the sealing area (13) of the solid oxide fuel cell stack and applying an external force to the force distributing layer, whereby a resulting compression pressure is distributed unequally across the region of the sealing area(13) and the electrochemically active area (18), so that the compression pressure exerted in the region of the sealing area (13) is greater than the compression pressure exerted on the electrochemically active area(18) of the solid oxide fuel cell stack.

## Patentansprüche

1. Kompressionsanordnung zum Verteilen einer äußeren Druckkraft auf einen Festoxidbrennstoffzellenstapel mit einer Vielzahl von Festoxidbrennstoffzellen (5) und mindestens einer Endplatte (6), wobei die Kompressionsanordnung eine kraftübertragende Platte (1) und eine kraftverteilende Schicht umfasst, wobei die Kompressionsanordnung gemeinsam mit dem Festoxidbrennstoffzellenstapel montiert ist und die äußere Druckkraft auf die kraftübertragende Platte (1) und die kraftverteilende Schicht ausgeübt wird, wobei die kraftverteilende Schicht auf einer Fläche von mindestens einer Endplatte (6) gegenüber der Endplattenfläche, die den Festoxidbrennstoffzellen zugewandt ist, angeordnet ist, wobei die kraftverteilende Schicht einen starren Rahmen (2), der neben einem Bereich eines Abdichtungsbereichs (17) des Festoxidbrennstoffzellenstapels verläuft, und ein oder mehrere elastische Elemente (3) aufweist, die in dem Raum angeordnet sind, der von dem starren Rahmen (2) umgeben ist, und auf der Fläche der Endplatte (6) gegenüber der Endplattenfläche, die den Festoxidbrennstoffzellen zugewandt ist, positioniert sind, sodass der elektrochemisch wirksame Bereich (18) mit einem Druck, der geringer als der Druck ist, der im Bereich des Abdichtungsbereichs (17) herrscht, zusammengedrückt wird, wenn die Kompressionsanordnung während des Gebrauchs mit der Festoxidbrennstoffzelle montiert ist.

2. Kompressionsanordnung gemäß Anspruch 1, wobei das eine oder die mehreren elastischen Elemente (3) in ein oder mehreren Positionierungselementen angeordnet sind.

3. Kompressionsanordnung gemäß Anspruch 1, wobei das eine oder die mehreren elastischen Elemente (3) aus der Gruppe Druckluft, ein fasriges keramisches Material und ein fasriges metallisches Material ausgewählt sind.

4. Kompressionsanordnung gemäß Anspruch 1, wobei das eine oder die mehreren elastischen Elemente ein Material auf der Basis von Glimmer umfasst.

5. Kompressionsanordnung gemäß Anspruch 4, wobei mindestens eins der ein oder mehreren elastischen Elemente (3) ein Blatt aus Glimmer ist.

6. Kompressionsanordnung gemäß Anspruch 5, wobei die Dicke des Glimmerblatts eine Dicke zwischen 0,8 - 1,2 mm aufweist.

7. Kompressionsanordnung gemäß Anspruch 1, wobei das eine oder die mehreren elastischen Elemente (3) mindestens eine Metallfeder (12) umfasst.

8. Kompressionsanordnung gemäß Anspruch 1, wobei das eine oder die mehreren elastischen Elemente (3) mindestens eine Metallfeder (12) ist und wobei die mindestens eine Metallfeder (12) in einem oder mehreren Positionierungselementen angeordnet ist.

9. Festoxidbrennstoffzellenstapel, umfassend eine Kompressionsanordnung gemäß einem der vorhergehenden Ansprüche.

10. Festoxidbrennstoffzellenstapel, umfassend eine Endplatte (6), ein oder mehrere Festoxidbrennstoffzellen und eine Kompressionsanordnung, die eine kraftübertragende Platte (1) und eine kraftverteilende Schicht aufweist, sodass eine äußere Druckkraft auf die kraftübertragende Platte (1) und die kraftverteilende Schicht ausgeübt wird, wenn die Kompressionsanordnung gemeinsam mit dem Festoxidbrennstoffzellenstapel montiert ist, wobei die kraftverteilende Schicht auf einer Fläche der Endplatte (6) gegenüber der Endplattenfläche, die den Festoxidbrennstoffzellen zugewandt ist, angeordnet ist, wobei die kraftverteilende Schicht einen starren Rahmen (2), der neben einem Bereich eines Abdichtungsbereichs (17) des Festoxidbrennstoffzellenstapels verläuft, und ein oder mehrere elastische Elemente (3) aufweist, die in dem Raum angeordnet sind, der von dem starren Rahmen (2) umgeben ist, und auf der Fläche der Endplatte (6) gegenüber der Endplattenfläche, die den Festoxidbrennstoffzellen zugewandt ist, positioniert sind, sodass der elektrochemisch wirksame Bereich (18) mit einem Druck, der geringer als der Druck ist, der im Bereich des Abdichtungsbereichs (17) herrscht, zusammengedrückt wird, wenn die Kompressionsanordnung während des Gebrauchs mit der Festoxidbrennstoffzelle montiert ist.

11. Festoxidbrennstoffzellenstapel gemäß Anspruch 10, wobei die kraftübertragende Platte mit einem Anpressdruck versehen wird, sodass der starre Rahmen über die kraftübertragende Platte mit einem Anpressdruck zwischen 70 % - 90 % des Anpressdrucks der kraftübertragenden Platte versehen wird.

12. Verfahren zum Komprimieren eines Festoxidbrennstoffzellenstapels an beiden Enden des Stapels, wobei das Verfahren die Schritte umfasst:
Stapeln einer Vielzahl von Festoxidbrennstoffzellen (5) elektrisch in Reihe, wodurch ein Bereich eines elektrochemisch wirksamen Bereichs (18) und ein Abdichtungsbereich (13) bereitgestellt wird, Bereitstellen einer Endplatte (6) an jedem Ende des Festoxidbrennstoffzellenstapels,
Bereitstellen einer kraftverteilenden Schicht aus ein oder mehreren elastischen Elementen (3) und einem starren Rahmen (2) auf der Fläche jeder Endplatte gegenüber dem Bereich des elektrochemisch wirksamen Bereichs (18) und des Abdichtungsbereichs (13) des Festoxidbrennstoffzellenstapels und Aufbringen einer äußeren Kraft auf die kraftverteilende Schicht, wodurch ein sich ergebender Kompressionsdruck ungleichmäßig über den Bereich des Abdichtungsbereichs (13) und des elektrochemisch wirksamen Bereichs (18) verteilt wird, sodass der Kompressionsdruck, der in dem Bereich des Abdichtungsbereichs (13) ausgeübt wird, größer ist als der Kompressionsdruck, der auf den elektrochemisch wirksamen Bereich (18) des Festoxidbrennstoffzellenstapels ausgeübt wird.

## Revendications

1. Ensemble de compression pour distribuer une force de compression externe sur un module de piles à combustible à oxyde solide avec une pluralité de piles à combustible à oxyde solide (5) et au moins une plaque d'extrémité (6), ledit ensemble de compression comprend une plaque de transmission de force (1) et une couche de distribution de force, ledit ensemble de compression est monté avec le module de piles à combustible à oxyde solide et la force de compression externe est exercée sur ladite plaque de transmission de force (1) et ladite couche de distribution de force, ladite couche de distribution de force est agencée sur une surface d'au moins une plaque d'extrémité (6) opposée à la surface de plaque d'extrémité faisant face aux piles à combustible à oxyde solide, ladite couche de distribution de force a un cadre rigide (2) s'étendant à proximité d'une région d'une zone d'étanchéité (17) du module de piles à combustible à oxyde solide, et un ou plusieurs élément(s) résilient(s) (3) étant placé(s) à l'intérieur de l'espace délimité par ledit cadre rigide (2) et étant positionné(s) sur une surface de la plaque d'extrémité (6) opposée à la surface de plaque d'extrémité faisant face aux piles à combustible à oxyde solide, de telle manière que la zone électrochimiquement active (18) est comprimée avec une pression qui est plus petite que la pression présente dans la région de la zone d'étanchéité (17), lorsque ledit ensemble de compression est monté avec la pile à combustible à oxyde solide à l'utilisation.

2. Ensemble de compression selon la revendication 1, dans lequel lesdits un ou plusieurs éléments résilients (3) sont agencés dans un ou plusieurs éléments de positionnement.

3. Ensemble de compression selon la revendication 1, dans lequel lesdits un ou plusieurs éléments résilients (3) sont choisis parmi le groupe de l'air comprimé, d'un matériau céramique fibreux et d'un matériau métallique fibreux.

4. Ensemble de compression selon la revendication 1, dans lequel lesdits un ou plusieurs éléments résilients comprennent un matériau à base de mica.

5. Ensemble de compression selon la revendication 4, dans lequel au moins un desdits un ou plusieurs éléments résilients (3) est une feuille constituée de mica.

6. Ensemble de compression selon la revendication 5, dans lequel l'épaisseur de la feuille de mica a une épaisseur entre 0,8-1,2 mm.

7. Ensemble de compression selon la revendication 1, dans lequel lesdits un ou plusieurs éléments résilients (3) comprennent au moins un ressort métallique (12).

8. Ensemble de compression selon la revendication 1, dans lequel lesdits un ou plusieurs éléments résilients (3) sont au moins un ressort métallique (12) et dans lequel ledit au moins un ressort métallique (12) est agencé dans un ou plusieurs éléments de positionnement.

9. Module de piles à combustible à oxyde solide comprenant un ensemble de compression selon l'une quelconque des revendications précédentes.

10. Module de piles à combustible à oxyde solide comprenant une plaque d'extrémité (6), une ou plusieurs piles à combustible à oxyde solide et un ensemble de compression ayant une plaque de transmission de force (1) et une couche de distribution de force, de telle manière qu'une force de compression externe est exercée sur ladite plaque de transmission de force (1) et ladite couche de distribution de force lorsque ledit ensemble de compression est monté avec le module de piles à combustible à oxyde solide, ladite couche de distribution de force est agencée sur une surface de ladite plaque d'extrémité (6) opposée à la surface de plaque d'extrémité faisant face aux piles à combustible à oxyde solide, ladite couche de distribution de force a un cadre rigide (2) s'étendant à proximité d'une région d'une zone d'étanchéité (17) du module de piles à combustible à oxyde solide, et un ou plusieurs éléments résilients (3) étant placés à l'intérieur de l'espace délimité par ledit cadre rigide (2) et étant positionnés sur une surface de la plaque d'extrémité (6) opposée à la surface de plaque d'extrémité faisant face aux piles à combustible à oxyde solide, de telle manière que la zone électrochimiquement active (18) est comprimée avec une pression qui est plus petite que la pression présente dans la région de la zone d'étanchéité (17), lorsque ledit ensemble de compression est monté avec la pile à combustible à oxyde solide à l'utilisation.

11. Pile à combustible à oxyde solide selon la revendication 10, dans laquelle ladite plaque de transmission de force est pourvue avec une pression de serrage, de telle manière que ledit cadre rigide par l'intermédiaire de ladite plaque de transmission de force est pourvu avec une pression de serrage entre 70 % - 90 % de ladite pression de serrage de ladite plaque de transmission de force.

12. Procédé de compression d'un module de piles à combustible à oxyde solide aux deux extrémités du module, le procédé comprenant les étapes de
empilement d'une pluralité de piles à combustible à oxyde solide (5) en série électrique, prévoyant ainsi une région d'une zone électrochimiquement active (18) et d'une zone d'étanchéité (13), prévision sur chaque extrémité du module de piles à combustible à oxyde solide d'une plaque d'extrémité (6),
prévision d'une couche de distribution de force d'un ou plusieurs éléments résilients (3) et d'un cadre rigide (2) sur une surface de chaque plaque d'extrémité étant opposée à la région de la zone électrochimiquement active (18) et de la zone d'étanchéité (13) du module de piles à combustible à oxyde solide et application d'une force externe à la couche de distribution de force, d'où il résulte qu'une pression de compression résultante est distribuée de façon inégale sur la région de la zone d'étanchéité (13) et de la zone électrochimiquement active (18), de telle manière que la pression de compression exercée dans la région de la zone d'étanchéité (13) est plus grande que la pression de compression exercée sur la zone électrochimiquement active (18) du module de piles à combustible à oxyde solide.
